# EUROPÄISCHE PATENTSCHRIFT

(11) **EP 0 693 465 B1**
(45) Veröffentlichungstag und Bekanntmachung des Hinweises auf die Patenterteilung: **21.01.1998**
(21) Anmeldenummer: 95110481.9
(22) Anmeldetag: 05.07.1995
(51) Int. Cl.: C04B 35/584, C04B 35/593, C04B 35/599, C04B 35/596

(54) **Verfahren zur Herstellung von Sinterwerkstoffen auf Basis von Siliciumnitrid/Bornitrid**
Method for the production of sintered materials based on silicon nitride/boron nitride
Procédé de fabrication de matériaux frittés à base de nitrure de silicium/nitrure de bore

(30) Priorität: 18.07.1994 DE 4425312
(43) Veröffentlichungstag der Anmeldung: 24.01.1996
(73) Patentinhaber: BAYER AG, 51368 Leverkusen (DE)
(72) Erfinder: Baldus, Hans-Peter, Dr., D-51379 Leverkusen (DE); Passing, Gerd, Dr., D-50668 Köln (DE); Wötting, Gerhard, Dr., D-96450 Coburg (DE)

(56) Entgegenhaltungen:
- KAWASAKI STEEL TECHNICAL REPORT, Nr.23, Oktober 1990 Seiten 5 - 11 K. ISOMURA ET AL. 'Development of machinable Si3N4-BN composite ceramics'
- MAT. RES. SOC. SYMP. PROC., Bd.271, 1992 Seiten 821 - 826 H.-P. BALDUS ET AL. 'Sythesis of advanced ceramics in the systems Si-B-N and Si-B-N-C employing novel precursor compounds'

## Beschreibung

Die vorliegende Erfindung betrifft ein Verfahren zur Herstellung von Sinterwerkstoffen auf Basis von Si₃N₄/BN und/oder SiAlON/BN.

Gemäß dem Stand der Technik werden Kompositkeramiken aus Si₃N₄, BN und oxidischer Korngrenzenphase aus den binären Pulverkomponenten Si₃N₄, BN und oxidischen Sinterhilfsmitteln bei hohen Temperaturen zwischen 1600 und 2000°C durch druckloses Sintern, Drucksintern, Heißpressen oder heißisostatisches Pressen hergestellt. Diese konventionelle, pulvermetallurgische Herstellungsmethode hat jedoch eine Reihe von Nachteilen:

Der Zusatz von hexagonalem BN-Pulver zu Si₃N₄-Pulver mit oxidischen Sinteradditiven führt aufgrund der blättchenförmigen Morphologie des BN zu einer Verschlechterung des Preßverhaltens des Si₃N₄-Pulvers mit den Sinteradditiven. Die Preßkörper zeigen mit zunehmendem BN-Gehalt eine verstärkte Rückdehnung nach dem Ausformen und eine Verringerung der Preßdichten.

Schon geringe Mengen an BN beeinträchtigen das Sinterverhalten des Si₃N₄ und führen zu höheren Porositäten in der Kompositkeramik. Um hochwertige, dichte Keramiken herstellen zu können, müssen teure Fertigungsverfahren wie Heißpressen oder heißisostatisches Pressen angewendet werden (JA-A-01 083 507, Asano et al., Taikabutsu Overseas, Vol. 11, 1991, Nr. 3, Seiten 3 bis 11 und Doche et al., Key Engineering Materials, Vol. 89-91, 1994, Seiten 449 bis 454, Switzerland).

Druckloses Sintern oder Drucksintern führt zu Kompositen mit geringer Dichte und schlechten mechanischen Eigenschaften (Isomura et al., Kawasaki Steel Technical Report, Nr. 23, Oktober 1990, Seiten 5 bis 11).

Für die physikalischen Eigenschaften der Kompositkeramik ist es essentiell wichtig, daß das BN homogen in der Si₃N₄-Matrix verteilt ist. Für hochwertige Komposite werden homogene Ausgangspulvermischungen benötigt. Es ist jedoch auch mit aufwendigen Mahlprozeduren schwierig, eine ausreichende Homogenität der Ausgangspulvermischung zu erreichen.

Es ist weiterhin bekannt, daß nach DE-A-4 107 108 einphasige amorphe Siliciumbornitridkeramik (Si₃B₃N₇) hergestellt werden kann. Baldus et al. (Better Ceramics Through Chemistry V, Vol. 271, 1992, pp 821 - 826) beschreiben die Herstellung keramischer Formkörper, die aus einer Pulvermischung bestehend aus 90 Gew.-% Si₃B₃N₇-Pulver und je 5 Gew.-% Al₂O₃- und Y₂O₃-Pulver durch druckloses Sintern hergestellt wurden. Das verwendete Si₃B₃N₇-Pulver weist vor dem Aufmahlen eine spezifische Oberfläche von 60 m²/g auf. Derart hergestellte Keramiken weisen aber eine Porosität von fast 40 % auf, so daß ein Einsatz in Anwendungen mit hohen mechanischen Belastungen ausscheidet.

In Kawasaki Steel Technical Report, Nr. 23, 1990, Seiten 5-11, K. Isomura et al. wird die Herstellung von gesinterten Compositen aus z.B. 10 oder 20 Gew.-% Bornitrid (Teilchengröße D₅₀ = 0,1 µm) und oxidischen Sinterhilfsmitteln enthaltendem Siliciumnitrid (siehe Tabelle 1 und Photo 1) offenbart.

Es wurde nun überraschenderweise gefunden, daß durch Verwendung einer einphasigen amorphen Si-B-N-Komponente, wie z.B. eines Si₃B₃N₇-Pulvers, mit einer spezifischen Oberfläche ≤ 1,5 m²/g in Verbindung mit Sinterhilfsmitteln Keramikkörper hoher Dichte durch Sintern erhalten werden können. Gegenstand dieser Erfindung ist somit ein Verfahren zur Herstellung von Sinterwerkstoffen auf Basis von Si₃N₄/BN und/oder SiAlON/BN und Sinteradditiven, wobei die BN-Komponente als kristalline Partikel mit einer mittleren Teilchengröße ≤ 2 µm vorliegt, und der BN-Gehalt zwischen 0,1 und 34 Vol.-% beträgt, bei dem ausgehend von einer einphasigen amorphen Si-B-N-Komponente mit einer spezifischen Oberfläche ≤ 1,5 m²/g und gegebenenfalls Si₃N₄-Pulver, unter Zusatz von oxidischen und/oder nitridischen Sinteradditiven eine Mischung hergestellt, aus dieser Mischung ein Formkörper gebildet und dieser bei Temperaturen im Bereich von 1450°C bis 2100°C in einer N₂-haltigen Atmosphäre gesintert wird, dadurch gekennzeichnet, daß die genannte Si-B-N-komponente eine spezifische Oberfläche ≤ 1,5 m²/g aufweist. Die mittlere Teilchengröße wird dabei bestimmt durch Ausmessen des maximalen Teilchendurchmesser auf REM-Aufnahmen.

In einer bevorzugten Ausführungsform enthalten die erfindungsgemäß hergestellten Sinterwerkstoffe nicht reaktive Metallcarbide, -nitride und/oder -silicide in Mengen von 0,1 bis 35 Vol.-%. Besonders geeignete nicht reaktive Metallcarbide, -nitride und/oder -silicide im Sinne dieser Erfindung sind SiC, B₄C, TiC, ZrC, NbC, TaC, TiN, HfN, MoSi₂.

Bevorzugt enthalten die erfindungsgemäß hergestellten Sinterwerkstoffe oxidische und/oder nitridische Sinteradditive in Mengen von 1 bis 20 Gew.-%. Besonders geeignete Sinteradditive sind hierbei MgO, Al₂O₃, SiO₂, TiO₂, ZrO₂, HfO₂, Sc₂O₃, Y₂O₃, La₂O₃ sowie weitere Seltenerdoxide und/oder AlN oder Kombinationen davon. Besonders gute physikalische Eigenschaften weisen die erfindungsgemäßen Sinterwerkstoffe dann auf, wenn sich unter den Sinterbedingungen eine flüssige Phase von mindestens 5 Vol.-% ausbildet.

Die Biegefestigkeit der erfindunsgemäß hergestellten Sinterwerkstoffe übertrifft die Festigkeit konventionell hergestellter drucklos gesinterter Si₃N₄/BN-Komposite um den Faktor 5 und ist mit der Biegefestigkeit heiß gepreßter Si₃N₄/BN-Komposite vergleichbar. So können die erfindungsgemäßen Sinterwerkstoffe mittels Normaldruck- oder Gasdrucksintern zu Dichten ≥ 85 % der theoretischen Dichte verdichtet werden.

Die physikalischen Eigenschaften der erfindungsgemäß hergestellten Sinterwerkstoffe sind begründet durch die verbesserte Homogenität des Gefüges und der höheren Sinterdichte. Die Biegefestigkeit der Sinterwerkstoffe beträgt in Abhängigkeit des BN-Gehaltes zwischen 200 MPa und 1.400 MPa, vorzugsweise zwischen 400 und 1.400 MPa. Die Vickershärte der Si₃N₄/BN-Sinterwerkstoffe beträgt zwischen 2 und 20 GPa, vorteilhaft zwischen 3 und 20 GPa.

Beim erfindungsgemäßen Verfahren kann die Herstellung der Si₃N₄/BN-Sinterwerkstoffe derart verbessert werden, daß auf aufwendige Herstellungsverfahren wie Heißpressen oder heißisostatisches Presses verzichtet werden kann.

Vorteilhaft wird das erfindungsgemäße Verfahren so durchgeführt, daß eine Mischung mit einem Si-B-Verhältnis von 1:1 bis 170:1 eingesetzt wird. Dieses Si-B-Verhältnis kann dabei auf zwei Arten zu höheren Si-Gehalten verschoben werden: zum einen durch das Verhältnis von Si-B in der einphasigen amorphen Si-B-N-Komponente und zum anderen durch Zugabe von Si₃N₄-Pulver zu der Si-B-N-Komponente. Im Fall der Zugabe von Si₃N₄-Pulver können vorteilhaft solche Pulver eingesetzt werden, deren mineralogischer Phasenbestand die α-Phase und/oder die β-Phase aufweist und/oder amorphe Si₃N₄-Bestandteile umfaßt.

Besonders gute mechanische Eigenschaften weisen die erfindungsgemäß hergestellten Sinterwerkstoffe auf, wenn sie als Hauptbestandteile zumindest 75 Vol.-% Si₃N₄ und BN enthalten, wobei der zu 100 % verbleibende Anteil aus einer oxidischen und/oder nitridischen Korngrenzenphase besteht. Diese Korngrenzenphase kann sich aus mehreren Phasen zusammensetzen, die amorph und/oder kristallin sind. Entsprechende Bedingungen gelten auch für die erfindungsgemäßen Sinterwerkstoffe, die weiterhin nicht reaktive carbidische, nitridische und/oder silicidische Phasen aufweisen.

Die globulare bis abgeflachte Teilchenmorphologie der nach dem erfindungsgemäßen Verfahren eingesetzten einphasigen amorphen Si-B-N-Komponente ermöglicht gegenüber dem Stand der Technik die Herstellung sinterfähiger Pulvermischungen mit hervorragender Verpreßbarkeit. Durch den Einsatz der Si-B-N-Komponente mit reduzierter spezifischer Oberfläche wird die Sinteraktivität derart gesteigert, daß Sinterwerkstoffe mit hohen BN-Gehalten und gleichzeitig hoher Sinterdichte schon durch druckloses oder gasdrucksintern erzeugt werden können. Vorteilhafter Weise wird somit das erfindungsgemäße Verfahren durch Sintern bei Gasdrücken bis 5 bar durchgeführt. Hierbei besteht das Gas aus Stickstoff und kann Zusätze von Edelgasen und/oder Inertgasen wie z.B. Kohlendioxid enthalten. Durch das Gas wird die thermische Zersetzung des Si₃N₄ in Si und N₂ unterbunden. Ebenso vorteilhaft läßt sich das Sintern als Gasdrucksintern bei Drücken im Bereich von 5 bis 200 bar durchführen.

Durch die freizügige Einstellbarkeit des BN-Gehaltes der Sinterwerkstoffe bis zu hohen BN-Gehalten von 34 Gew.-%, was einem Si zu B-Verhältnis von 1:1 entspricht, ohne Nachteile für die Sinterdichten, können die physikalischen Eigenschaften der Sinterwerkstoffe in einem großen Bereich beeinflußt werden.

Ein weiterer Vorteil des erfindungsgemäßen Verfahrens ergibt sich bei Pulvermischungen von einphasigen amorphen Si-B-N-Komponenten und Si₃N₄ hinsichtlich der Homogenität der Mischung. Im bevorzugten Si₃B₃N₇ sind B, N und Si auf molekularer Ebene homogen verteilt, was einer Vormischung der Komponenten entspricht. Außerdem weist 1 Mol BN in Form der Verbindung Si₃B₃N₇ ein Volumen von 38 cm³ auf, während es in Form von hexagonalem BN nur 11 cm³ Volumen aufweist. Es ist offensichtlich, daß eine gegebene molare Menge BN mit definierter Teilchengröße in Form eines großen Volumens Si₃B₃N₇ durch mechanisches Mischen homogener in einem Si₃N₄-Pulver verteilt werden kann, als die gleiche molare Menge an hexagonalem BN mit nur 29 % des Volumens. Auch vorteilhaft ist außerdem, daß sich große Volumina leichter dosieren lassen als kleine.

Obwohl das erfindungsgemäße Verfahren hinsichtlich der Wirtschaftlichkeit besondere Vorteile beim Sintern bei Gasdrücken im Bereich von 0 bis 200 bar aufweist, ist es jedoch auf diese Sinterverfahren nicht beschränkt. Ebenso vorteilhaft kann das Sintern als Heißpressen oder als Sinter-HIP-Prozeß oder als Kapsel-HIP-Prozeß durchgeführt werden.

Im folgenden wird die Erfindung beispielhaft erläutert, ohne daß hierin eine Einschränkung zu sehen ist.

### Beispiel 1

9 g Si₃B₃N₇-Pulver mit einer spezifischen Oberfläche von 0,52 m²/g und einer Teilchengröße kleiner 0,3 mm wurde in einer Planetenkugelmühle in Isopropanol 6 Stunden lang aufgemahlen und gleichzeitig mit 0,5 g Y₂O₃- und 0,5 g Al₂O₃-Pulver vermischt. Hierbei wurde das Si₃B₃N₇-Pulver auf eine spezifische Oberfläche von ca. 10 m²/g aufgemahlen. Das Pulver wurde kaltisostatisch zu Zylindern von 10 mm Durchmesser und 15 mm Höhe verpreßt. Der Grünkörper wurde in Stickstoff mit 24°C/min bis 1900°C erhitzt und dort 1 Stunde bei dieser Temperatur gehalten. Der resultierende monolithische, rißfreie Körper zeigte eine Enddichte von 2540 kg/m³, entsprechend 89 % der theoretischen Dichte. Röntgendiffraktionsmessungen zeigen an, daß eine Phasentrennung des einphasigen Si₃B₃N₇ in Si₃N₄ und BN stattgefunden hat. Die Mikrostruktur zeigt im Anschliff drei Phasen mit jeweiligen Anteilen von 57 % Si₃N₄, 27,5 % BN und 15,5 % oxidischer Korngrenzenphase. Das BN liegt als Ansammlung kleiner Kristallite vor, die Inseln mit einem mittleren Durchmesser von 1 µm bilden - bestimmt durch Ausmessen der maximalen Teilchendurchmesser auf REM-Aufnahmen. Diese BN-Anreicherungen sind homogen in der Si₃N₄-Matrix verteilt. Die Vickershärte des Kompositmaterials beträgt HV₂ = 3,9 GPa und die Biegefestigkeit 410 MPa.

### Beispiel 2 (Vergleich)

9 g Si₃B₃N₇-Pulver mit einer spezifischen Oberfläche von 2,4 m²/g und einer Teilchengröße kleiner 0,3 mm wurde in einer Planetenkugelmühle in Isopropanol 6 Stunden lang aufgemahlen und gleichzeitig mit 0,5 g Y₂O₃- und 0,5 g Al₂O₃-Pulver vermischt. Das Pulver wurde kaltisostatisch zu Zylindern von 10 mm Durchmesser und 15 mm Höhe verpreßt. Der Grünkörper wurde in Stickstoff mit 24°C/min bis 1900°C erhitzt und dort 1 Stunde bei dieser Temperatur gehalten. Der resultierende monolithische, rißfreie Körper zeigte eine Enddichte von 2010 kg/m³, entsprechend 70 % der theoretischen Dichte.

### Beispiel 3 (Vergleich)

5,86 g Si₃N₄-Pulver mit einer spezifischen Oberfläche von 19 m²/g und 3,14 g BN-Pulver mit einer spezifischen Oberfläche von 13 m²/g wurde in einer Planetenkugelmühle in Isopropanol 6 Stunden lang aufgemahlen und gleichzeitig mit 0,5 g Y₂O₃- und 0,5 g Al₂O₃-Pulver vermischt. Das Pulver wurde kaltisostatisch zu Zylindern von 10 mm Durchmesser und 15 mm Höhe verpreßt. Der Grünkörper wurde in Stickstoff mit 24°C/min bis 1900°C erhitzt und dort 1 Stunde bei dieser Temperatur gehalten. Der resultierende monolithische, rißfreie Körper zeigte eine Enddichte von 1850 kg/m³, entsprechend 65 % der theoretischen Dichte, und hatte eine kreidige Konsistenz.

### Beispiel 4

3 g Si₃B₃N₇-Pulver mit einer spezifischen Oberfläche von 0,52 m²/g und einer Teilchengröße kleiner 0,3 mm wurde in einer Planetenkugelmühle in Isopropanol 6 Stunden lang aufgemahlen und gleichzeitig mit 6 g Si₃N₄, 0,5 g Y₂O₃- und 0,5 g Al₂O₃-Pulver vermischt. Das Pulver wurde kaltisostatisch zu Zylindern von 10 mm Durchmesser und 15 mm Höhe verpreßt. Der Grünkörper wurde in Stickstoff mit 24°C/min bis 1900°C erhitzt und dort 1 Stunde bei dieser Temperatur gehalten. Der resultierende monolithische, rißfreie Körper zeigte eine Enddichte von 3070 kg/m³, entsprechend 97 % der theoretischen Dichte. Die Mikrostruktur zeigt im Anschliff drei Phasen mit jeweiligen Anteilen von 83 % Si₃N₄, 11 % BN und 6 % oxidischer Korngrenzenphase. Das BN liegt als Ansammlung kleiner Kristallite vor, die Inseln mit einem mittleren Durchmessesr von 0,8 µm bilden. Diese BN-Anreicherungen sind homogen in der Si₃N₄-Matrix verteilt. Die Vickershärte des Materials beträgt HV₂ = 11,5 GPa.

### Beispiel 5

3 g Si₃B₃N₇-Pulver mit einer spezifischen Oberfläche von 0,52 m²/g und einer Teilchengröße kleiner 0,3 mm wurde in einer Planetenkugelmühle in Isopropanol 6 Stunden lang aufgemahlen und gleichzeitig mit 6 g Si₃N₄, 0,5 g Y₂O₃- und 0,5 g Al₂O₃-Pulver vermischt. Das Pulver wurde kaltisostatisch zu Zylindern von 10 mm Durchmesser und 15 mm Höhe verpreßt. Der Grünkörper wurde in Stickstoff mit 24°C/min bis 1900°C erhitzt und dort 1 Stunde bei dieser Temperatur mit 80 bar Stickstoff gasdruckgesintert. Der resultierende monolithische, rißfreie Körper zeigte eine Enddichte von 3100 kg/m³, entsprechend 98 % der theoretischen Dichte. Die Mikrostruktur zeigt im Anschliff drei Phasen mit jeweiligen Anteilen von 83 % Si₃N₄, 11 % BN und 6 % oxidischer Korngrenzenphase. Das BN liegt als Ansammlung kleiner Kristallite vor, die Inseln mit einem mittleren Durchmesser von 0,8 µm bilden. Diese BN-Anreicherungen sind homogen in der Si₃N₄-Matrix verteilt. Die Vickershärte des Materials beträgt HV₂ = 12,9 GPa und die Biegefestigkeit 800 MPa.

### Beispiel 6

Es wurden Grünkörper unaxial bei 82 MPa aus den Pulvern der Vergleichsbeispiele 2 und 3 gepreßt. Die Dichte des Preßkörpers aus Beispiel 2 betrug 1140 kg/m³ entsprechend 57 % der theoretischen Dichte. Die Rückdehnung des Preßkörpers betrug nach dem Entformen 1,5 %. Der Preßkörper aus Beispiel 3 wies dagegen eine Dichte von 1440 kg/m³ entsprechend 47 % der theoretischen Dichte auf. Die Rückdehnung der Probe betrug nur 0,4 %.

In der folgenden Tabelle 1 sind die physikalischen Eigenschaften der erfindungsgemäßen Werkstoffe denen des Standes der Technik gegenüber gestellt.

**Tabelle 1**

| Probe | Beispiel Nr. | | Isomura¹⁾ | | Douche²⁾ | Asano³⁾ |
|---|---|---|---|---|---|---|
| | 1 | 5 | | | | |
| BN-Gehalt (Gew.-%) | 32 | 11 | 32 | 16 | 10 | 30 |
| Dichte ρ / (kg/m³) | 2540 | 3100 | - | - | 3070 | - |
| Dichte ρ / (% th. Dichte) | 89 | 98 | 62 | 85 | 96 | 88 |
| 3-Punkt Biegefestigkeit σ / (MPa) | 410 | 800 | 70 | 320 | 700 | 345 |
| Vickershärte HV₂ (GPa) | 3,9 | 12,9 | - | - | 10 | - |

| | | | | | | |
|---|---|---|---|---|---|---|
| ¹⁾ Isomura et al., Kawasaki Steel Technical Report, Nr. 23, Okt. 1990, Seiten 5-11. | | | | | | |
| ²⁾ Douche et al., Key Engineering Materials, Vol. 89-91, 1994, Seiten 449-454, Switzerland. | | | | | | |
| ³⁾ Asano et al., Taikabutsu Oberseas, Vol. 11, 1991, Nr. 3, Seiten 3-11. | | | | | | |

## Patentansprüche

1. Verfahren zur Herstellung von Sinterwerkstoffen auf Basis von Si₃N₄/BN und/oder SiAlON/BN und Sinteradditiven, wobei die BN-Komponente als kristalline Partikel mit einer mittleren Teilchengröße ≤ 2 µm vorliegt, und der BN-Gehalt zwischen 0,1 und 34 Vol.-% beträgt, bei dem ausgehend von einer einphasigen amorphen Si-B-N-Komponente und gegebenenfalls Si₃N₄-Pulver, unter Zusatz von oxidischen und/oder nitridischen Sinteradditiven eine Mischung hergestellt, aus dieser Mischung ein Formkörper gebildet und dieser bei Temperaturen im Bereich von 1450°C bis 2100°C in einer N₂-haltigen Atmosphäre gesintert wird, dadurch gekennzeichnet, daß die genannte Si-B-N-komponente eine spezifische Oberfläche ≤ 1,5 m²/g aufweist.

2. Verfahren gemäß Anspruch 1, dadurch gekennzeichnet, daß eine Mischung mit einem Si/B-Verhältnis von 1:1 bis 170:1 eingesetzt wird.

3. Verfahren gemäß einem der Ansprüche 1 oder 2, dadurch gekennzeichnet, daß das Sintern bei Gasdrücken bis 5 bar durchgeführt wird.

4. Verfahren gemäß einem der Ansprüche 1 oder 2, dadurch gekennzeichnet, daß das Sintern als Gasdrucksintern bei Drücken im Bereich von 5 bis 200 bar durchgeführt wird.

5. Verfahren gemäß einem der Ansprüche 1 oder 2, dadurch gekennzeichnet, daß das Sintern als Heißpressen durchgeführt wird.

6. Verfahren gemäß einem der Ansprüche 1 oder 2, dadurch gekennzeichnet, daß das Sintern als Sinter-HIP-Prozeß durchgeführt wird.

7. Verfahren gemäß einem der Ansprüche 1 oder 2, dadurch gekennzeichnet, daß das Sintern als Kapsel-HIP-Prozeß durchgeführt wird.

## Claims

1. Process for the production of sintered materials based on Si₃N₄/BN and/or SiAlON/BN and sintering additives, wherein the BN component is present in the form of crystalline particles with an average particle size ≤ 2 µm and the BN content amounts to between 0.1 and 34 vol-%, in which, starting from a monophase amorphous Si-B-N component and, optionally, Si₃N₄ powder, subject to addition of oxidic and/or nitridic sintering additives a mixture is produced, from said mixture a moulded article is formed and the latter is sintered at temperatures in the range from 1,450°C to 2,100°C in an atmosphere which contains N₂, said process being characterised in that the stated Si-B-N component has a specific surface ≤ 1.5 m²/g.

2. Process according to Claim 1, characterised in that use is made of a mixture with an Si/B ratio of 1:1 to 170:1.

3. Process according to one of Claims 1 or 2, characterised in that the sintering is implemented at gas pressures up to 5 bar.

4. Process according to one of Claims 1 or 2, characterised in that the sintering is implemented as gas-pressure sintering at pressures in the range from 5 to 200 bar.

5. Process according to one of Claims 1 or 2, characterised in that the sintering is implemented as hot pressing.

6. Process according to one of Claims 1 or 2, characterised in that the sintering is implemented as an HIP sintering process.

7. Process according to one of Claims 1 or 2, characterised in that the sintering is implemented as an HIP capsule process.

## Revendications

1. Procédé de préparation de matériaux frittés à base de Si₃N₄/BN et/ou de SiAlON/BN et d'additifs de frittage dans lequel le composant BN est à l'état de particules cristallines à une dimension moyenne inférieure ou égale à 2 µm et la teneur en BN va de 0,1 à 34 % en volume selon lequel, partant d'un composant Si-B-N monophasique amorphe et le cas échéant de poudre de Si₃N₄, on prépare avec adjonction d'additifs de frittage consistant en oxydes et/ou nitrures, un mélange à partir duquel on forme un objet moulé qu'on fritte à des températures dans l'intervalle de 1 450 à 2 100°C en atmosphère contenant de l'azote, caractérisé en ce que ledit composant Si-B-N présente une surface spécifique inférieure ou égale à 1,5 m²/g.

2. Procédé selon la revendication 1, caractérisé en ce que l'on utilise un mélange dans lequel le rapport Si/B va de 2:1 à 170:1.

3. Procédé selon l'une des revendications 1 à 2, caractérisé en ce que le frittage est réalisé sous des pressions de gaz allant jusqu'à 5 bar.

4. Procédé selon l'une des revendications 1 à 2, caractérisé en ce que le frittage consiste en un frittage sous pression de gaz réalisé à des pressions dans l'intervalle de 5 à 200 bar.

5. Procédé selon l'une des revendications 1 à 2, caractérisé en ce que le frittage est réalisé par compression à chaud.

6. Procédé selon l'une des revendications 1 à 2, caractérisé en ce que le frittage est réalisé par la technique de frittag HIP.

7. Procédé selon l'une des revendications 1 à 2, caractérisé en ce que le frittage est réalisé par la technique en capsule HIP.
